# FASCICULE DE BREVET EUROPEEN

(11) **EP 4 287 229 B1**
(45) Date de publication et mention de la délivrance du brevet: **29.04.2026**
(21) Numéro de dépôt: 23177054.6
(22) Date de dépôt: 02.06.2023
(51) Int. Cl.: H01G 11/04, H01G 11/14, H01G 11/32, H01G 11/50, H01G 11/60, H01G 11/62, H01G 11/66, H01G 11/30, H01G 11/06

(54) **ELECTRODE DE RÉFÉRENCE POUR SUPERCONDENSATEUR**
REFERENZELEKTRODE FÜR EINEN SUPERKONDENSATOR
REFERENCE ELECTRODE FOR SUPERCAPACITOR

(30) Priorité: 03.06.2022 FR 2205366
(43) Date de publication de la demande: 06.12.2023
(73) Titulaire: Commissariat à l'Energie Atomique et aux Energies Alternatives, 75015 Paris (FR)
(72) Inventeur: YVENAT, Marie-Eve, 38054 GRENOBLE CEDEX 09 (FR); CHAVILLON, Benoît, 38054 GRENOBLE CEDEX 09 (FR); MAYOUSSE, Eric, 38054 GRENOBLE CEDEX 09 (FR)
(74) Mandataire: Ipsilon

(56) Documents cités:
- EP-A1- 2 442 400
- WO-A2-2021/188570
- JP-A- 2016 181 333
- US-A1- 2019 044 097
- US-A1- 2019 061 555
- US-A1- 2019 318 882

## Description

### Domaine technique

La présente invention concerne le domaine des systèmes de stockage électrochimique, plus précisément le domaine des dispositifs électrochimiques de type supercondensateurs, et en particulier celui des supercondensateurs conventionnels et hybrides au potassium.

Elle vise plus précisément la mise en œuvre d'une électrode à base de Li₁₋ₓFePO₄, comme électrode de référence dans une cellule de supercondensateur à électrolyte non-aqueux, pour un supercondensateur conventionnel ou hybride au potassium.

### Technique antérieure

Les dispositifs électrochimiques de type supercondensateurs trouvent une application dans de nombreux domaines, nécessitant la fourniture rapide de faibles densités d'énergie, notamment dans l'alimentation des systèmes embarqués de faible épaisseur, comme les cartes de crédit, les étiquettes intelligentes, dans l'alimentation des téléphones mobiles ou encore dans l'alimentation des véhicules électriques.

Du point de vue du fonctionnement, les supercondensateurs fonctionnent sur le principe de la double-couche électrochimique, d'où l'appellation anglo-saxonne parfois rencontrée de « Electrochemical double layer capacitor » (connue également sous l'abréviation EDLC), soit, en d'autres termes, sur le principe de stockage d'énergie par distribution, au sein d'au moins une cellule, des ions provenant d'un électrolyte au voisinage de la surface de deux électrodes poreuses (respectivement, une électrode positive et une électrode négative) imprégnées d'un électrolyte ionique, séparées par une membrane poreuse permettant d'assurer une isolation électronique entre les électrodes, tout en permettant un passage facile des ions de l'électrolyte.

Dans les supercondensateurs conventionnels, dits encore « symétriques », les deux électrodes (électrode positive et électrode négative) sont toutes deux à base de carbone activé et l'électrolyte à base d'ions alcalins. Ces supercondensateurs symétriques présentent une forte densité de puissance et une cyclabilité élevée, mais une densité d'énergie faible liée à la capacité moyenne du supercondensateur et à la tension de fonctionnement.

Plus récemment, il a également été développé des supercondensateurs, dits « hybrides » ou « asymétriques », se situant entre les supercondensateurs symétriques classiquement utilisés à base de carbone activé et les batteries. Une des électrodes, classiquement l'électrode positive, est à base de carbone activé, l'autre électrode, classiquement l'électrode négative, étant constituée à partir d'un matériau de batterie rechargeable. Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

Les supercondensateurs hybrides permettent avantageusement d'obtenir des densités d'énergie supérieures à celles des supercondensateurs conventionnels grâce à l'augmentation de la tension de fonctionnement du système.

La demande FR 3 005 199 décrit un exemple de supercondensateur hybride au potassium, comportant une électrode négative comportant du graphite, une électrode positive comportant du carbone activé et un électrolyte non aqueux comportant au moins un sel de potassium.

Il est important que le fonctionnement des systèmes supercondensateurs, conventionnels ou hybrides, ne se situe pas en dehors de la plage de stabilité électrochimique du ou des solvant(s) organique(s) utilisé(s) au niveau de l'électrolyte, pour ne pas engendrer de dégradations et notamment la production de gaz. Afin de déterminer si ce phénomène indésirable a lieu, il importe de pouvoir connaître et suivre l'évolution du potentiel de chaque électrode, lors du fonctionnement de la cellule électrochimique du supercondensateur. Pour cela, il serait souhaitable de pouvoir introduire une électrode dite de référence au sein du système supercondensateur. Une électrode de référence doit présenter un potentiel stable et connu, permettant de connaître à chaque instant le potentiel de chacune des électrodes positive et négative du système.

Etant donné que ces systèmes de supercondensateurs, conventionnels ou hybrides, mettent généralement en œuvre un milieu électrolytique à base d'un ou plusieurs solvants organiques, tels que des solvants carbonates et nitriles, par exemple de l'acétronitrile, on se trouve confronté à l'absence de référence connue dans ce type de milieu.

La réalisation de systèmes à trois électrodes, notamment pour des cellules de format « pouch cell », a déjà été décrite dans le cadre de batteries métal-ion dans le document US 9,379,418.

Les documents US 2019/044097 A1, WO 2012/049201 et WO 2017/156757 décrivent quant à eux la mise en œuvre, dans des batteries au lithium, d'une électrode de référence à base d'un composé de lithium non métallique, en particulier à base de LiFePO₄ (LFP) ou Li₄Ti₅O₁₂ (LTO).

Ces documents n'ont pas trait à des systèmes supercondensateurs tels que visés selon l'invention, tels que des supercondensateurs hybrides au potassium.

Dans le domaine des supercondensateurs, on peut citer le document US 2011/0043968 qui propose, pour évaluer les caractéristiques électrochimiques de systèmes de supercondensateurs conventionnels et hybrides au lithium, d'utiliser une électrode de référence au calomel saturé (ECS). L'utilisation d'une telle électrode de référence n'est toutefois pas compatible avec le conditionnement souhaité des cellules dans un format cylindrique ou prismatique, en particulier de type « pouch cell ». US 2019/318882 Al divulgue une cellule de supercondensateur hybride comportant un électrolyte non-aqueux comprenant un sel de Lithium, ladite cellule comportant au moins une électrode positive, une électrode négative et une électrode de référence, par exemple une sous la forme d'une feuille de lithium.

Par conséquent, il demeure le besoin de disposer d'une électrode de référence pour les cellules de supercondensateurs, notamment dans le cadre des supercondensateurs conventionnels ou hybrides fonctionnant au potassium.

### Exposé de l'invention

La présente invention vise précisément à proposer une électrode utile comme électrode de référence dans une cellule de supercondensateur, par exemple pour un supercondensateur hybride au potassium. L'utilisation de l'électrode de référence selon l'invention est définie par les caractéristiques de la revendication 1. La cellule pour un supercondensateur selon l'invention est définie par les caractéristiques de la revendication 14. Le supercondensateur selon l'invention est défini par les caractéristiques de la revendication 17.

Les inventeurs ont ainsi découvert qu'il est possible de mettre en œuvre une électrode formée à partir d'un matériau, le LiFePO₄ (connu sous l'appellation LFP), connu dans le cadre de la réalisation d'électrodes positives de batteries Li-ion, comme électrode de référence dans une cellule de supercondensateur, en particulier pour un supercondensateur au potassium.

Plus particulièrement, l'invention concerne, selon un premier de ses aspects, l'utilisation, à titre d'électrode de référence dans une cellule d'un supercondensateur à électrolyte non-aqueux, le supercondensateur étant conventionnel au potassium ou hybride au potassium, d'une électrode à base de Li₁₋ₓFePO₄, avec 0,30 ≤ x ≤ 0,70, en particulier 0,50 ≤ x ≤ 0,60.

Une électrode à base de Li₁₋ₓFePO₄ mise en œuvre comme électrode de référence dans le cadre de la présente invention est désignée plus simplement dans la suite du texte sous l'appellation « électrode de référence selon l'invention ».

Comme évoqué précédemment, une électrode de référence est définie comme étant une électrode possédant un potentiel électrochimique stable et connu, permettant de servir de point de référence pour mesurer indépendamment le potentiel des électrodes dans une cellule électrochimique.

Une électrode de référence est ainsi caractérisée par un potentiel stable, en particulier d'environ 3,4 V *vs* Li/Li⁺.

Comme détaillé dans la suite du texte, une électrode de référence selon l'invention peut être obtenue, préalablement à sa mise en œuvre dans ladite cellule de supercondensateur, à partir d'une électrode à base de LiFePO₄, par délithiation (désintercalation d'ions lithium), permettant d'atteindre un potentiel stable (plateau de potentiel).

Une électrode de référence selon l'invention est mise en œuvre dans une cellule d'un supercondensateur conventionnel au potassium ou hybride au potassium, autrement dit une cellule d'un supercondensateur fonctionnant au potassium (dit plus simplement « supercondensateur au potassium »), c'est-à-dire dont l'électrolyte non-aqueux comporte au moins un sel de potassium.

L'invention concerne encore, selon un autre de ses aspects, une cellule d'un supercondensateur, conventionnel ou hybride, comportant un électrolyte non-aqueux comprenant au moins un sel de potassium, ladite cellule comportant au moins :
- une électrode positive, en particulier à base de carbone activé ;
- une électrode négative, en particulier à base de carbone activé dans le cas d'un supercondensateur conventionnel, ou à base d'un matériau carboné d'intercalation dudit élément alcalin, en particulier à base de graphite, dans le cas d'un supercondensateur hybride ; et
- une électrode de référence selon l'invention à base de Li₁₋ₓFePO₄.

Ainsi, l'invention met en œuvre un système à trois électrodes, les électrodes positive et négative de la cellule du supercondensateur et, en outre, une électrode de référence selon l'invention à base de Li₁₋ₓFePO₄.

L'invention concerne encore un supercondensateur, conventionnel ou hybride, comprenant au moins une cellule telle que définie précédemment, intégrant une électrode de référence à base de Li₁₋ₓFePO₄.

Selon une première variante de réalisation, une électrode de référence selon l'invention est mise en œuvre dans au moins l'une des cellules d'un supercondensateur conventionnel au potassium.

Une cellule d'un supercondensateur conventionnel selon l'invention peut ainsi combiner des électrodes positive et négative à base de carbone activé et ladite électrode de référence selon l'invention.

Selon une autre variante de réalisation particulièrement avantageuse, une électrode de référence selon l'invention est mise en œuvre dans au moins l'une des cellules d'un supercondensateur hybride au potassium (noté « KIC » pour « potassium-ion capacitor).

Plus particulièrement, une cellule de supercondensateur hybride peut combiner une électrode positive à base de carbone activé, une électrode négative à base d'un matériau carboné d'intercalation d'au moins du potassium et plus particulièrement à base de graphite, et ladite électrode de référence selon l'invention.

De telles variantes de systèmes supercondensateurs selon l'invention, intégrant une électrode de référence selon l'invention, sont détaillées plus précisément dans la suite du texte.

De manière avantageuse, une électrode de référence selon l'invention est compatible avec le conditionnement des cellules dans tout format souhaité, en particulier dans un format prismatique, avantageusement sous la forme d'une cellule type sachet souple, plus connue sous l'appellation en anglais « pouch cell », comme illustré dans les exemples qui suivent. L'intégration d'une électrode de référence selon l'invention au sein d'au moins l'une des cellules d'un supercondensateur permet avantageusement d'accéder aux potentiels de chacune des électrodes positive et négative. La connaissance et le suivi des potentiels des électrodes positive et négative permet de pouvoir détecter le cas échéant des défauts potentiels à leur fonctionnement.

Ainsi, l'invention concerne, selon un autre de ses aspects, l'utilisation d'une électrode de référence à base de Li₁₋ₓFePO₄, avec 0,30 ≤ x ≤ 0,70, en particulier 0,40 ≤ x ≤ 0,60, dans une cellule de supercondensateur comportant un électrolyte non-aqueux, en particulier une cellule de supercondensateur conventionnel ou hybride au potassium, pour connaître les potentiels d'au moins l'une, de préférence de chacune des électrodes positive et négative, de ladite cellule de supercondensateur, en particulier pour suivre l'évolution des potentiels d'au moins l'une des électrodes positive et négative, au cours du fonctionnement dudit supercondensateur.

Une surveillance des potentiels des électrodes positive et négative au cours du fonctionnement du supercondensateur, par l'intermédiaire de l'électrode de référence selon l'invention, permet avantageusement une utilisation optimisée du supercondensateur, en particulier une utilisation à sa capacité maximale, sans pour autant s'exposer à des risques de dysfonctionnement, et permet ainsi une sûreté améliorée à l'usage du supercondensateur.

D'autres caractéristiques, variantes et avantages d'une électrode de référence selon l'invention et de sa mise en œuvre au niveau d'une cellule de supercondensateur selon l'invention, ressortiront mieux à la lecture de la description, des exemples et figures qui vont suivre, donnés à titre illustratif et non limitatif de l'invention.

### Brève description des dessins

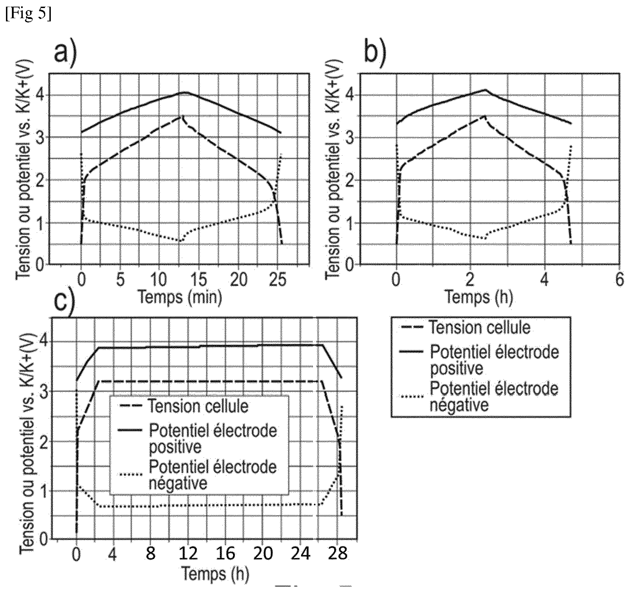

[Fig 1] présente, de manière schématique, en coupe transversale, un exemple d'assemblage 100 des différents éléments, y compris l'électrode de référence 21 selon l'invention, au sein d'une cellule de supercondensateur selon l'invention ;
[Fig 2] présente, de manière schématique, la cellule pouch-cell à deux électrodes mise en œuvre selon l'exemple 1 (1.1.) pour préparer une électrode de référence selon l'invention, à partir d'une électrode LFP ;
[Fig 3] présente le profil de tension de la cellule graphite/LFP préparée selon l'exemple 1 (1.1.) pendant et après une demi-charge à C/10 ;
[Fig 4] présente, de manière schématique, une cellule de supercondensateur au format pouch-cell, comme préparé en exemple 1 (1.2.), comprenant une électrode positive, l'électrode de référence selon l'invention et une électrode négative, les électrodes étant séparées par des membranes poreuses en polypropylène imprégnées par l'électrolyte ;
[Fig 5] présente les courbes obtenues selon l'exemple 2 de tension de la cellule et des potentiels des électrodes négative et positive pour la cellule de supercondensateur hybride préparée en exemple 1 :
   - lors d'un cycle à 5C (figure 5 (a)),
   - lors d'un cycle à C/2 (figure 5 (b)) et
   - lors des différentes étapes de formation d'un supercondensateur hybride au potassium suivant le procédé décrit dans la demande déposée en France sous le numéro FR2109574 : charge à C/2 jusqu'à 3,2 V, maintien pendant 24 heures à la tension de 3,2 V et décharge à C/2 jusqu'à 0,5 V (figure 5 (c)).

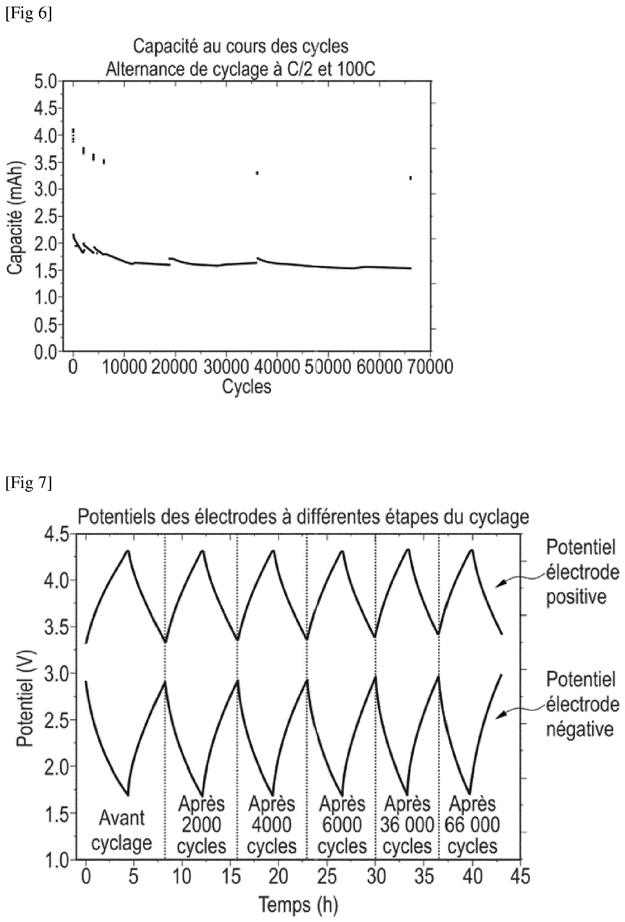

[Fig 6] présente l'évolution de la capacité de la cellule du supercondensateur conventionnel préparée en exemple 3, au cours des cycles en alternant un cyclage à un régime C/2 et 100C ; [Fig 7] présente l'évolution des potentiels des électrodes positive et négative à différentes étapes du cyclage suivant l'exemple 4, obtenue pour une cellule d'un supercondensateur conventionnel intégrant une électrode de référence selon l'invention.

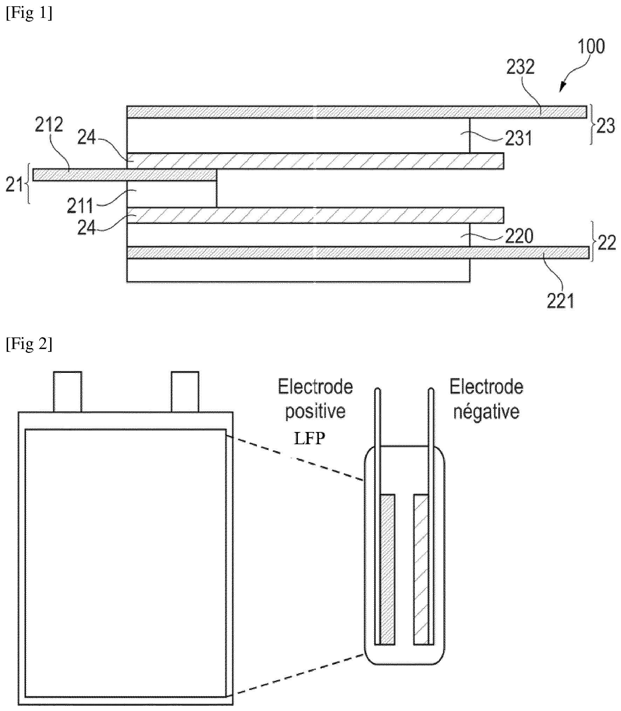

Il convient de noter que, pour des raisons de clarté, les différents éléments sur les figures 1, 2 et 4 sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### Electrode de référence

Comme indiqué précédemment, l'invention met en œuvre une électrode de référence formée à partir du matériau LiFePO₄ partiellement délithié, et plus précisément une électrode à base de Li₁₋ₓFePO₄, avec 0,30 ≤ x ≤ 0,70.

L'électrode de référence à base de Li₁₋ₓFePO₄ est telle qu'elle présente un potentiel électrochimique stable, autrement dit fixé au niveau d'un plateau de potentiel, en particulier à une valeur d'environ 3,4 V *vs* Li/Li⁺.

L'électrode de référence selon l'invention est plus particulièrement à base d'un matériau Li₁₋ₓFePO₄, où x est compris entre 0,40 et 0,60, en particulier entre 0,50 et 0,60 et plus particulièrement d'environ 0,50 (soit 0,50 ± 0,01).

Une électrode à base de Li₁₋ₓFePO₄ selon l'invention peut être obtenue comme décrit plus précisément ci-dessous, préalablement à sa mise en œuvre dans ladite cellule, à partir d'une électrode à base de LiFePO₄, par délithiation partielle permettant d'obtenir un potentiel électrochimique stable, en particulier stabilisé à une valeur de 3,4 V *vs* Li/Li⁺.

Les électrodes à base de LiFePO₄, appelées plus simplement électrodes LFP, sont connues comme électrodes positives pour des batteries au lithium.

L'électrode de LFP, à partir de laquelle est obtenue une électrode de référence selon l'invention, peut être préparée par toute méthode connue de l'homme du métier.

La préparation d'une électrode de LFP peut comprendre, d'une manière générale, au moins les étapes suivantes :
- préparation d'une dispersion, plus couramment appelée « encre », comprenant, dans un ou plusieurs solvants aqueux et/ou organiques, au moins du LiFePO₄ ; un ou plusieurs liants et éventuellement un ou plusieurs additifs conducteurs électroniques ;
- dépôt de l'encre à la surface d'un collecteur de courant ; et
- évaporation du ou desdits solvant(s) de l'encre pour former le film d'électrode.

Le solvant de l'encre peut comprendre de l'eau et/ou un ou plusieurs solvants organiques, par exemple de la N-méthyl-2-pyrrolidone.

Les additifs conducteurs électroniques sont mis en œuvre pour améliorer la conductivité électronique de l'électrode. Ils peuvent être choisis par exemple parmi des fibres de carbone, du noir de carbone, des nanotubes de carbone et leurs mélanges.

Le ou lesdits additifs conducteurs électroniques, lorsqu'ils sont présents, peuvent être mis en œuvre de préférence en une teneur allant de 1 à 10 % massique, en particulier de 2 à 8 % massique, par rapport à la masse l'électrode. Il est entendu que la masse totale de l'électrode n'inclut pas la masse du collecteur de courant.

Les liants sont mis en œuvre pour assurer la tenue mécanique de l'électrode sur le collecteur de courant, la cohésion des différents composants de l'électrode ou encore ses propriétés de flexibilité. Ils peuvent être choisis parmi des liants polymères, en particulier choisis parmi les polymères fluorés, par exemple parmi le polytétrafluoroéthylène (PTFE), le polyfluorure de vinylidène (PVDF), les polymères dérivés de carboxyméthylcellulose (CMC), les polysaccharides et les latex notamment de type caoutchouc styrène-butadiène (BR ou en langue anglaise « stryrene-butadiene rubber » (SBR)).

Un liant particulièrement préféré est le poly(fluorure de vinylidène) (PVDF).

Le ou lesdits liants peuvent être présents en une quantité inférieure ou égale à 20 % massique, par rapport à la masse totale de l'électrode, en particulier inférieure ou égale à 10 % massique, notamment comprise entre 1 et 10 % massique, par rapport à la masse totale de l'électrode. Il est entendu que la masse totale de l'électrode n'inclut pas la masse du collecteur de courant.

L'encre peut être homogénéisée avant son étalement.

Le dépôt de l'encre à la surface du collecteur de courant peut être opéré par toute technique connue de l'homme du métier, par exemple par enduction, par une technique d'impression, par extrusion ou par colaminage.

Le collecteur de courant peut être plein, par exemple sous la forme d'un feuillard ou sous la forme d'une grille.

Le collecteur de courant peut être en un matériau métallique choisi parmi le cuivre, l'aluminium, le nickel ou l'inox.

De préférence, en particulier lorsque l'électrolyte de la cellule du supercondensateur dans laquelle l'électrode de référence est mise en œuvre comprend un solvant organique de type nitrile, notamment de l'acétonitrile, le collecteur de courant est avantageusement à base d'aluminium. Il peut s'agir par exemple une feuille d'aluminium revêtue de carbone.

De préférence, lorsque le collecteur de courant de l'électrode de référence est en cuivre, l'électrolyte de la cellule de supercondensateur dans laquelle l'électrode de référence est mise en œuvre ne comprend pas d'acétonitrile, mais peut comprendre au moins un solvant carbonate.

L'évaporation du ou des solvants de l'encre peut être opérée par séchage, par exemple à l'étuve, à une température comprise entre 20 et 150 °C, notamment entre 50 et 80°C, en particulier pendant une durée comprise entre 1 et 15 heures.

Le matériau actif, LiFePO₄, de l'électrode LFP représente de préférence 60 à 97 % massique, en particulier de 70 à 96 % massique, par rapport à la masse totale de l'électrode, exclusion faite de la masse du collecteur de courant.

De préférence, le grammage de l'électrode LFP (défini comme la masse de matériau actif LFP en grammes par unité de surface en cm²) est compris entre 1 mg/cm² et 30 mg/cm², en particulier entre 3 mg/cm² et 10 mg/cm². Le grammage de l'électrode de LFP, autrement dit la masse de matériau LiFePO₄ par unité de surface, peut être ajusté en contrôlant le taux de matériau actif LiFePO₄ et l'épaisseur de dépôt, notamment d'enduction, de l'encre formulée sur le collecteur de courant.

### Préparation de l'électrode de référence

Comme indiqué précédemment, une électrode de référence selon l'invention est obtenue par délithiation partielle d'une électrode de LFP.

Le processus de délithiation (ou désintercalation du lithium) partielle de l'électrode de LFP est plus particulièrement opéré électrochimiquement, de sorte à atteindre un potentiel électrochimique stable.

Plus précisément, l'obtention d'une électrode de référence de LFP partiellement délithiée met en œuvre les étapes suivantes :
(i) fourniture d'une cellule électrochimique, comprenant ladite électrode de LFP comme électrode positive, et une contre-électrode négative, en particulier à base de graphite, de lithium ou d'oxyde de silicum SiO_{y} où y est compris entre 1 et 2 ;
(ii) charge de ladite cellule dans des conditions adaptées pour atteindre un plateau de potentiel, en particulier à une valeur d'environ 3,4 V *vs* Li/Li⁺.

La cellule électrochimique pour la préparation de l'électrode de LFP partiellement délithiée est plus particulièrement une cellule électrochimique distincte de la cellule du supercondensateur dans laquelle l'électrode de référence est destinée à être mise en œuvre. La contre-électrode négative peut être par exemple à base de graphite, de lithium ou d'oxyde de silicum SiO_{y} où y est compris entre 1 et 2.

L'électrolyte de la cellule électrochimique pour la délithiation partielle de l'électrode de LFP comprend plus particulièrement un ou plusieurs sels de lithium dans un ou plusieurs solvants organiques.

Le ou les solvants organiques peuvent être par exemple des solvants carbonates, par exemple du carbonate d'éthylène (EC), du carbonate de diéthyle (DEC) et/ou du carbonate de diméthyle (DMC).

A titre d'exemples de sel de lithium, on peut citer le LiPF₆, LiClO₄, LiBF₄, LiAsF₆, LiCF₃SO₃, LiN(CF₃SO₂)₃, LiN(C₂F₅SO₂), le bistrifluorométhylsulfonylimide de lithium LiN[SO₂CF₃]₂ (connu sous l'abréviation LiTFSI), le bis(fluorosulfonyl)amidure de lithium (connu sous l'abréviation LiFSI) LiN[SO₂F]₂, et les mélanges de ceux-ci.

De préférence, l'électrolyte comporte, comme sel de lithium, du LiPF₆ ou LiTFSI, de préférence du LiPF₆.

Le ou lesdits sels, par exemple le sel de lithium, peu(ven)t être par exemple présent(s), dans l'électrolyte, en une teneur allant de 0,3 M à 3 M.

Selon une première variante de préparation de l'électrode de référence à base du matériau Li₁₋ₓFePO₄, la cellule peut être chargée partiellement (délithiation partielle) pour atteindre le plateau de potentiel. La charge en étape (ii) est plus particulièrement une « demi-charge », permettant ainsi de conduire à l'électrode de référence à base du matériau Li₁₋ₓFePO₄.

Elle peut être réalisée à un régime allant de C/2 à C/100, en particulier de C/10, jusqu'à atteindre le plateau de potentiel, en particulier un potentiel stable d'environ 3,4 V *vs* Li/Li⁺. La durée de charge peut être par exemple comprise entre 1 et 50 heures, en particulier entre 5 et 7 heures.

Par exemple, comme illustré en exemple 1, dans le cadre de la délithiation face à une contre-électrode en graphite, la charge peut être effectuée pendant une durée d'environ 6 heures à un régime de C/10, afin d'atteindre une tension de cellule de 3,3 V, correspondant à un plateau de potentiel d'environ 3,4 V *vs* Li/Li⁺.

Au cours de la charge, des ions Li⁺ sont désinsérés de l'électrode de LFP et sont déposés sur l'électrode négative, de sorte qu'un matériau de formule Li₁₋ₓFePO₄ avec 0,30 ≤ x ≤ 0,70, en particulier 0,50 ≤ x ≤ 0,60, soit obtenu.

Selon une autre variante de préparation de l'électrode de référence à base du matériau Li₁₋ₓFePO₄, la cellule peut être chargée complètement (délithiation totale), suivi d'une décharge partielle jusqu'à atteindre l'état de lithiation visé (plateau de potentiel).

La surface de l'électrode à base du matériau Li₁₋ₓFePO₄ peut être nettoyée préalablement à sa mise en œuvre comme électrode de référence au sein de la cellule de supercondensateur. Par exemple, elle peut être rincée au carbonate de diméthyle, afin d'éliminer les sels résiduels au niveau de la porosité de l'électrode.

Le matériau de type Li₁₋ₓFePO₄ représente de préférence de 60 à 97 % massique, en particulier de 70 à 96 % massique, par rapport à la masse totale de l'électrode de référence, exclusion faite de la masse du collecteur de courant.

Comme indiqué précédemment, l'électrode de référence selon l'invention comprend de préférence, outre ledit matériau Li₁₋ₓFePO₄, un ou plusieurs liants, en particulier tels que définis précédemment, en particulier choisis parmi des liants polymériques, par exemple de type PVDF, et éventuellement un ou plusieurs additifs conducteurs électroniques, en particulier tels que définis précédemment, notamment choisis parmi des fibres de carbone, du noir de carbone, des nanotubes de carbone et leurs mélanges.

Le ou lesdits liants peuvent représenter moins de 20 % massique de la masse totale de l'électrode, en particulier moins de 10 % massique, notamment entre 1 et 10 % massique, de la masse totale de l'électrode, exclusion faite de la masse du collecteur de courant.

Le ou lesdits additifs conducteurs électroniques, lorsqu'ils sont présents, peuvent représenter de 1 à 10 % massique, en particulier de 2 à 8 % massique, de la masse totale de l'électrode, exclusion faite de la masse du collecteur de courant.

De préférence, le grammage de l'électrode de référence à base Li₁₋ₓFePO₄ (défini comme la masse de matériau Li₁₋ₓFePO₄ en grammes par unité de surface en cm²) est compris entre 2 mg/cm² et 30 mg/cm², en particulier entre 5 mg/cm² et 25 mg/cm².

### Cellule du supercondensateur

Comme indiqué précédemment, l'électrode à base de Li₁₋ₓFePO₄ est mise en œuvre selon l'invention comme électrode de référence au sein d'au moins une cellule d'un système supercondensateur comportant un électrolyte non aqueux.

Une cellule de base d'un supercondensateur comprend typiquement une électrode positive, une électrode négative et une membrane poreuse séparant lesdites électrodes et imprégnée par ledit électrolyte.

L'électrode de référence selon l'invention est ainsi intégrée en tant que troisième électrode à la cellule du supercondensateur.

Comme indiqué précédemment, l'électrode de référence selon l'invention peut être mise en œuvre au niveau d'un supercondensateur « conventionnel » (dit encore « standard ») ou d'un supercondensateur dit « hybride ».

Une cellule de supercondensateur selon l'invention est ainsi un système à trois électrodes, comportant plus particulièrement :
- une électrode positive, en particulier à base de carbone activé ;
- une électrode négative, en particulier à base de carbone activé dans le cas d'un supercondensateur conventionnel, ou à base d'un matériau carboné d'intercalation d'un élément alcalin, en particulier à base de graphite, dans le cas d'un supercondensateur hybride ; et
- ladite électrode de référence selon l'invention à base de Li₁₋ₓFePO₄, en particulier préparée comme décrit précédemment.

Des modes particuliers de réalisation de cellules de supercondensateur selon l'invention sont décrits plus précisément dans la suite du texte.

### Supercondensateur conventionnel

Selon une première variante de réalisation, une électrode de référence selon l'invention est intégrée à une cellule d'un supercondensateur conventionnel, de préférence d'un supercondensateur conventionnel au potassium.

Une cellule d'un supercondensateur conventionnel comprend typiquement des électrodes positive et négative à base de carbone activé.

Une électrode à base de carbone activé peut comprendre plus particulièrement une teneur d'au moins 60 % massique de carbone activé, par rapport à la masse totale de l'électrode, étant entendu que la masse totale de l'électrode n'inclut pas la masse du collecteur de courant.

En particulier, le carbone activé peut être présent en une teneur allant de 60 % massique à 95 % massique par rapport à la masse totale de l'électrode, en particulier de 85 % à 95 % massique, par rapport à la masse totale de l'électrode.

Outre la présence de carbone activé, l'électrode à base de carbone activé peut comprendre un ou plusieurs liants organiques, qui vont contribuer à assurer la cohésion mécanique de ladite électrode.

Ces liant organiques peuvent être, en particulier, des liants polymériques comprenant un ou plusieurs polymères choisis parmi :
- les polymères fluorés, tels qu'un polytétrafluoroéthylène (PTFE), un polyfluorure de vinylidène (PVDF), un copolymère poly(fluororure de vinylidène-co-hexafluoropropène) (PVDF-HFP), un copolymère fluoré éthylène-propylène (FEP), un copolymère issu de la copolymérisation de tétrafluoroéthylène et du perfluoroalcoxyvinyléther (PFA) ;
- les polyimides ;
- les polyacrylonitriles ; et
- les mélanges de ceux-ci.

Avantageusement, ce ou ces liants sont présents en une teneur choisie de sorte à être la plus faible possible, sans que cela compromette la tenue mécanique au cours du cyclage sur l'ensemble de la gamme de températures d'utilisation, généralement comprises entre -40°C et la température d'ébullition du ou des solvants organiques de l'électrolyte non-aqueux. Par exemple, le ou lesdits liants peuvent être présents en une teneur inférieure ou égale à 15 % massique, par rapport à la masse totale de l'électrode, en particulier de 1 à 15 % massique et plus particulièrement de 2 à 7 % massique, par rapport à la masse totale de l'électrode ; étant entendu que la masse totale de l'électrode n'inclut pas la masse du collecteur de courant.

Une électrode à base de carbone activé peut également comprendre au moins un additif carboné conducteur de l'électricité autre que du carbone activé, en particulier choisi parmi les noirs de carbone, les noirs d'acétylène, du graphite, les nanotubes de carbone, les fibres de carbone et leurs mélanges, par exemple des fibres de carbone obtenues en phase vapeur (connues sous l'abréviation VGCF).

Le ou lesdits additifs carbonés peuvent être présents en une teneur allant jusqu'à 15 % massique, par rapport à la masse totale de ladite électrode, en particulier de 1 à 15 % massique et plus particulièrement de 2 à 10 % massique, par rapport à la masse totale de l'électrode, étant entendu que la masse de l'électrode n'inclut pas la masse du collecteur de courant.

### Supercondensateur hybride

Selon une autre variante de réalisation, une électrode de référence selon l'invention est intégrée à une cellule d'un supercondensateur hybride, de préférence d'un supercondensateur hybride au potassium.

Une cellule d'un supercondensateur hybride comprend typiquement une électrode, en particulier l'électrode positive, à base de carbone activé, et une contre-électrode, typiquement l'électrode négative, constituée à partir d'un matériau de batterie rechargeable.

L'électrode à base de carbone activé, typiquement l'électrode positive, peut être telle que décrite précédemment dans le cadre des électrodes d'une cellule d'un supercondensateur conventionnel.

L'électrode à base d'un matériau de batterie rechargeable, typiquement l'électrode négative, est plus particulièrement à base d'un matériau carboné d'intercalation d'au moins un élément alcalin, tel que le lithium, le sodium, le potassium, le rubidium et/ou le césium ; en particulier à base d'un matériau carboné d'intercalation d'au moins un élément alcalin distinct du lithium, tel que le sodium, le potassium, le rubidium et/ou le césium, et plus particulièrement un matériau carboné d'intercalation du potassium.

Avantageusement, l'électrode négative est à base d'un matériau carboné de type graphite, et plus particulièrement de graphite particulaire, dont la taille moyenne de particules peut aller de 1 à 50 µm, cette taille de particules étant mesurée par granulométrie laser D₅₀.

Selon un mode de réalisation particulier, dans le cas d'une cellule de supercondensateur fonctionnant au potassium, l'électrode négative est à base de graphite. Le potassium a la capacité de s'intercaler dans le graphite de l'électrode négative, à des stades élevés de charge.

De même que pour l'électrode à base de carbone activé, l'électrode négative peut comprendre un ou plusieurs liants organiques, qui vont avantageusement contribuer à assurer la cohésion mécanique de ladite électrode.

Le ou lesdits liants organiques peuvent être des liants polymériques, tels que décrits précédemment pour une électrode à base de carbone activé, en particulier choisis parmi les polymères fluorés, les polyimides, les polyacrylonitriles et les mélanges de ceux-ci.

De même que décrit précédemment pour une électrode à base de carbone activé, le ou lesdits liants sont avantageusement présents en une teneur choisie de sorte à être la plus faible possible, sans que cela compromette la tenue mécanique au cours du cyclage sur l'ensemble de la gamme de températures d'utilisation de la cellule de supercondensateur.

Par exemple, le ou lesdits liants peuvent être présents en une teneur inférieure ou égale à 15 % massique, par rapport à la masse totale de l'électrode, en particulier de 1 à 15 % massique et plus particulier de 2 à 7 % massique, par rapport à la masse totale de l'électrode, étant entendu que la masse totale de l'électrode n'inclut pas la masse du collecteur de courant.

L'électrode négative peut également comprendre au moins un additif carboné conducteur de l'électricité autre que le matériau d'intercalation carboné susmentionné, en particulier choisi parmi les noirs de carbone, les noirs d'acétylène, les nanotubes de carbone, les fibres de carbone et les mélanges de ceux-ci, par exemple des fibres de carbone obtenues en phase vapeur (connues sous l'abréviation VGCF).

Le ou lesdits additifs carbonés peuvent être présents en une teneur allant jusqu'à 15 % massique, par rapport à la masse totale de ladite électrode, en particulier de 1 à 15 % massique et plus particulièrement de 2 à 12 % massique, par rapport à la masse totale de l'électrode, étant entendu que la masse de l'électrode n'inclut pas la masse du collecteur de courant.

En outre, l'électrode négative peut comprendre également, en sus du matériau d'intercalation d'au moins un élément alcalin, lorsque celui-ci est du graphite, du carbone activé identique ou différent de celui de l'électrode positive, ce qui peut permettre avantageusement d'améliorer les performances en puissance de l'électrode négative. Ce type d'électrode peut être ainsi qualifié d'électrode composite.

L'électrode positive et l'électrode négative d'une cellule d'un supercondensateur selon l'invention, conventionnel ou hybride, peuvent être associées chacune à un collecteur de courant conducteur de l'électricité.

Un collecteur de courant peut se présenter sous la forme d'un feuillard métallique apposé sur l'une des faces desdites électrodes.

Un collecteur de courant peut être en un matériau métallique choisi parmi le cuivre, l'aluminium, le nickel ou l'inox. De préférence, en particulier lorsque l'électrolyte comprend un solvant de type nitrile, notamment de l'acétonitrile, les collecteurs de courant sont en aluminium.

De préférence, lorsqu'au moins l'un des collecteurs de courant est en cuivre, l'électrolyte de la cellule de supercondensateur dans laquelle ladite électrode de référence est mise en œuvre, ne comprend pas d'acétonitrile, mais peut comprendre au moins un solvant carbonate.

### Electrolyte non-aqueux

L'électrolyte non-aqueux d'une cellule de supercondensateur, conventionnel ou hybride, selon l'invention comporte un ou plusieurs sels de métal alcalin, de préférence de potassium, dans un milieu solvant non aqueux formé plus particulièrement d'un ou plusieurs solvants organiques.

De préférence, l'électrolyte comprend au moins un sel de métal alcalin choisi parmi les sels de sodium, les sels de potassium, et les mélanges de ceux-ci.

Les sels de sodium peuvent être par exemple choisis parmi NaClO₄, NaBF₄, NaPF₆, le bis(trifluorométhanesulfonyl)imide de sodium (NaTFSI), le bis(fluorosulfonyl)imide de sodium (NaFSI), le bis(oxalato)borate de sodium (NaBOB), NaSCN, NaSbF₆, NaAsF₆, NaAlCl₄, NaSiF₆, NaSO₃CF₃ et les mélanges de ceux-ci.

Les sels de potassium peuvent être par exemple choisis parmi du perchlorate de potassium (KClO₄), fluoroborate de potassium (KBF₄), hexafluorophosphate de potassium (KPF₆), le bis(trifluorométhanesulfonyl)imide de potassium (KTFSI), le bis(fluorosulfonyl)imide de potassium (KFSI), le bis(oxalato)borate de potassium (KBOB), KSCN, KSbF₆, KAsF₆, LAlCl₄, KSiF₆, KSO₃CF₃, et les mélanges de ceux-ci.

Dans un mode de réalisation particulier, une électrode de référence selon l'invention est mise en œuvre pour un supercondensateur fonctionnant au potassium, en particulier pour un supercondensateur hybride au potassium.

Autrement dit, l'électrolyte de la cellule de supercondensateur au potassium selon l'invention comprend au moins un sel de potassium, en particulier tel que décrit précédemment, dans un ou plusieurs solvants organiques.

De préférence, le ou lesdits sels de potassium peuvent être choisis parmi KClO₄, KBF₄, KPF₆ et les mélanges de ceux-ci.

Dans un mode de réalisation particulier, le sel de potassium est du KPF₆.

La concentration en le ou lesdits sels au niveau du milieu solvant de l'électrolyte peut être d'au moins 0,05 mol/L, en particulier jusqu'à saturation du milieu solvant à 25 °C, en particulier comprise entre 0,5 mol/L et 2,5 mol/L, par exemple 0,8 M.

Comme indiqué précédemment, l'électrolyte comprend plus particulièrement le ou lesdits sels, par exemple ledit sel de potassium, dans un ou plusieurs solvants organiques.

Le ou lesdits solvants organiques de l'électrolyte peuvent être notamment choisis parmi :
- les solvants nitriles, tels que l'acétonitrile, le 3-méthoxypropionitrile (MPN), l'adiponitrile (ADP), le glutaronitrile (GN) ;
- les solvants carbonates, tels que le carbonate d'éthylène (EC), le carbonate de propylène (PC), le diméthylcarbonate (DMC), le diéthylcarbonate (DEC), l'éthylméthylcarbonate (EMC) ;
- les solvants lactones, tels que la γ-butyrolactone (GBL), la γ-valérolactone (GVL) ;
- les solvants sulfones, tels que la diméthylsulfone (DMS), l'éthylméthylsulfone (EMS), la diéthylsulfone (DES), le sulfolane (SL) ;
- les solvants lactames, tels que la N-méthylpyrrolidone (NMP) ;
- les solvants cétones, tels que l'acétone, la méthyléthylcétone (MEK) ;
- les solvants nitroalcanes, tels que le nitrométhane (NM), le nitroéthane (NE) ;
- les solvants amines, tels que le 1,3-diaminopropane (DAP), l'éthylènediamine (EDA) ;
- les solvants sulfoxydes, tels que le diméthylsulfoxyde (DMSO) ;
- les solvants esters, tels que l'acétate d'éthyle (EA), l'acétate de méthyle (MA), l'acétate de propyle (AP) ;
- les solvants éthers linéaires, tels que le diméthoxyéthane (DME) ;
- les solvants éther cycliques, tels que le dioxane, le dioxolane (DIOX), le tétrahydrofurane (THF) ;
- les solvants oxazolidones, tels que le 3-méthyl-2-oxazolidone ;
- les solvants amides, par exemple le diméthylformamide ; et
- les mélanges de ceux-ci.

De préférence, le ou lesdits solvants organiques sont choisis parmi les solvants carbonates, les solvants éthers linéaires, les solvants nitriles, les solvants lactones, les solvants amides et les mélanges de ceux-ci, de préférence les solvants nitriles, tel que l'acétonitrile.

Lorsque l'électrolyte comprend au moins un sel de potassium, il comprend, avantageusement le ou lesdits sels de potassium, de préférence choisi parmi KClO₄, KPF₆, KBF₄, et les mélanges de ceux-ci, notamment du KPF₆, en solution dans au moins un solvant organique choisi parmi les solvants carbonates, les solvants éthers linéaires, les solvants nitriles, les solvants lactones, les solvants amides et les mélanges de ceux-ci.

Selon un mode de réalisation particulier, l'électrolyte comprend, voire est formé d'au moins un sel de potassium, en particulier choisi parmi KClO₄, KPF₆, KBF₄ et les mélanges de ceux-ci, notamment du KPF₆, en solution dans au moins un solvant choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

Encore plus préférentiellement, l'électrolyte mis en œuvre au niveau d'une cellule de supercondensateur selon l'invention comprend au moins un sel de potassium, en particulier du KClO₄, KPF₆ ou KBF₄, en particulier du KPF₆, en solution dans un solvant ou un mélange des solvants organiques, choisi parmi du carbonate de propylène seul ; un mélange carbonate d'éthylène/diéthylcarbonate 1 :1 ; un mélange carbonate d'éthylène/diméthylcarbonate 1 :1 ; un mélange diméthoxyéthane/carbonate de propylène 1 :2 ; de l'acétonitrile seul ; de la γ-butyrolactone seule ; ou du diméthylformamide seul.

Dans un mode de réalisation particulier, l'électrolyte mis en œuvre au niveau d'une cellule d'un supercondensateur au potassium selon l'invention comprend, voire est formé d'un sel de potassium, en particulier du KPF₆, dans l'acétonitrile.

Il est entendu que les différents modes de réalisation particuliers décrits précédemment, relatifs aux différentes électrodes et à l'électrolyte, peuvent être combinés, dans la mesure du possible, pour définir des variantes particulières de composition d'une cellule de supercondensateur selon l'invention.

Dans un mode de réalisation particulier, une électrode de référence selon l'invention est mise en œuvre au niveau d'au moins une cellule d'un supercondensateur conventionnel au potassium, comportant :
- une électrode positive à base de carbone activé, en particulier telle que décrite précédemment ;
- une électrode négative à base de carbone activé, en particulier telle que décrite précédemment ; et
- un électrolyte comprenant au moins un sel de potassium, en particulier du KPF₆, dans un ou plusieurs solvants organiques de type nitrile, en particulier dans l'acétonitrile.

Dans un autre mode de réalisation particulier, une électrode de référence selon l'invention est mise en œuvre au niveau d'au moins une cellule d'un supercondensateur hybride au potassium, comportant :
- une électrode positive à base de carbone activé, en particulier telle que décrite précédemment ;
- une électrode négative à base de graphite, en particulier telle que décrite précédemment ; et
- un électrolyte comprenant au moins un sel de potassium, en particulier du KPF₆, dans un ou plusieurs solvants organiques de type nitrile, en particulier dans l'acétonitrile.

### Assemblage au sein de la cellule du supercondensateur

Il est entendu que les différents éléments sont assemblés au sein de la cellule du supercondensateur de sorte, d'une part, à permettre une utilisation efficace de l'électrode de référence, par exemple à des fins de connaître les potentiels des électrodes positive et négative et, d'autre part, de sorte que la présence de cette troisième électrode n'interfère pas négativement au niveau du fonctionnement de la cellule du supercondensateur.

En particulier, l'électrode de référence peut être utilisée lorsque la cellule du supercondensateur est soumise à un cyclage pour des courants allant de C/100 à 20C, en particulier de C/20 à 5C.

D'une manière générale, les différentes électrodes de la cellule du supercondensateur sont séparées les unes des autres par une membrane poreuse, dite encore « séparateur », imprégnée par l'électrolyte.

De tels séparateurs poreux peuvent être par exemple en polyéthylène, en polypropylène.

La cellule d'un supercondensateur selon l'invention peut présenter avantageusement une configuration de couches superposées. Autrement dit, l'assemblage de la cellule peut être réalisé par empilement des différents éléments sous la forme de couches.

Chacune des électrodes d'une cellule de supercondensateur selon l'invention peut se présenter sous la forme d'une couche du matériau d'électrode, déposée sur au moins l'une des faces ou sur les deux faces d'un collecteur de courant se présentant sous la forme d'un film mince, par exemple sous la forme d'un feuillard métallique.

Selon une variante de réalisation, dans le cas d'une architecture de la cellule du supercondensateur sous la forme d'un empilement des différents éléments, l'électrode de référence peut être positionnée entre les électrodes positive et négative.

La Figure 1 représente, de manière schématique, en coupe transversale, un exemple d'assemblage 100 des différents éléments, intégrant une électrode de référence selon l'invention, au sein d'une cellule de supercondensateur selon l'invention.

Comme représenté sur cette figure, dans une variante de réalisation, une cellule d'un supercondensateur selon l'invention, en particulier d'un supercondensateur au potassium, peut comporter l'assemblage 100 des différents éléments suivants, dans cet ordre d'empilement :
- une électrode positive 22, en particulier à base de carbone activé ; en particulier formée d'une double couche 220 à base de carbone activé sur un collecteur de courant 221, par exemple en aluminium ;
- un séparateur poreux 24, par exemple en polypropylène, destiné à être imprégné par l'électrolyte ;
- ladite électrode de référence 21 à base de Li₁₋ₓFePO₄, en particulier préparée comme décrit précédemment, formée d'une couche 211 du matériau d'électrode à base de Li₁₋ₓFePO₄ au niveau d'un collecteur de courant 212, par exemple en aluminium revêtue de carbone ;

- un séparateur poreux 24, par exemple en polypropylène, destiné à être imprégné par l'électrolyte ; et
- une électrode négative 23, en particulier formée d'une couche 231 à base de carbone activé dans le cas d'un supercondensateur conventionnel, ou à base d'un matériau carboné d'intercalation d'au moins un élément alcalin, par exemple à base de graphite, dans le cas d'un supercondensateur hybride, sur un collecteur de courant 232, par exemple en aluminium.

Au sein de la cellule du supercondensateur, l'assemblage est trempé par un électrolyte non aqueux, comportant au moins un sel de métal alcalin, avantageusement un sel de potassium tel que le KPF₆, dans un ou plusieurs solvants organiques, de préférence de type nitrile, par exemple l'acétonitrile.

Les séparateurs poreux assurent une isolation électronique entre les électrodes, tout en permettant un passage facile des ions de l'électrolyte.

L'électrode de référence 21, intercalée au sein de l'assemblage entre les électrodes positive 22 et négative 23, présente avantageusement une surface dans un plan orthogonal à la direction d'empilement des différents éléments (électrodes et séparateurs), réduite comparativement aux surfaces des électrodes positive et négative dans ce même plan. De préférence, l'aire projetée de l'électrode de référence dans un plan orthogonal à la direction d'empilement, ne dépasse pas 10 %, en particulier 5 %, de l'aire projetée dans ce même plan des électrodes positive et négative.

L'invention n'est pas limitée à l'agencement représenté en figure 1. D'autres assemblages peuvent être considérés, pour autant qu'ils permettent d'assurer à la fois le fonctionnement de la cellule du supercondensateur et l'utilisation de l'électrode de référence. Des exemples de configuration de cellules à trois électrodes sont par exemple décrit dans le document US 9,379,418.

Une cellule de supercondensateur selon l'invention peut être conditionnée dans un format prismatique ou cylindrique. Dans le format prismatique, l'assemblage est de préférence conditionné dans un emballage capable d'empêcher une contamination par l'air ou l'eau de la cellule.

Dans un mode de réalisation particulier, une cellule de supercondensateur selon l'invention peut être conditionnée dans un format prismatique, et en particulier sous la forme d'une « pouch cell » comme illustré dans les exemples. Une telle cellule « pouch cell » présente notamment un emballage flexible en aluminium-plastique.

Un supercondensateur, conventionnel ou hybride, selon l'invention peut comprendre au moins une cellule selon l'invention intégrant une électrode de référence.

De manière avantageuse, l'application d'un faible courant entre l'électrode positive (respectivement, l'électrode négative) et l'électrode de référence permet de mesurer et de surveiller le potentiel de l'électrode positive (respectivement, l'électrode négative), pendant le fonctionnement du supercondensateur.

Les branchements et circuits électriques externes à l'assemblage ne sont pas représentés sur les figures.

Le circuit externe entre l'électrode positive (respectivement, l'électrode négative) et l'électrode de référence peut être connecté électriquement à un moniteur de tension pour permettre d'indiquer ou d'enregistrer le potentiel de l'électrode positive (respectivement, l'électrode négative).

Les potentiels des électrodes positive et négative peuvent être surveillés simultanément ou non, de manière continue, périodique, aléatoire ou à des moments prédéterminés, au cours du fonctionnement du supercondensateur.

Il est entendu que l'ensemble des caractéristiques décrites pour l'électrode de référence et pour les différents éléments d'une cellule de supercondensateur s'applique à la cellule de supercondensateur, au supercondensateur et aux utilisations revendiqués selon l'invention.

L'invention va maintenant être décrite au moyen des figures et exemples suivants, donnés bien entendu à titre illustratif et non limitatif de l'invention.

### EXEMPLE 1

### Préparation d'une électrode de référence selon l'invention et mise en œuvre au niveau d'une cellule d'un supercondensateur hybride au potassium

### 1.1. Préparation de l'électrode de référence

Une électrode de LFP est préparée par enduction d'une encre comprenant du LiFePO₄ (grade 2B, Prayon) à 95 % massique, 2,5 % massique de PVDF (Solvay 5130) et 2,5 % massique de noir de carbone de référence SuperC65 (obtenu auprès de Timcal Co., Suisse), à la surface d'un collecteur de courant (feuille d'aluminium revêtue de carbone), puis séchage.

Comme représenté schématiquement en figure 2, l'électrode de LFP est ensuite montée en cellule de format « pouch cell » face à une contre-électrode négative de graphite. L'électrolyte est un mélange de carbonates et du sel LiPF₆ (1M).

L'électrode de LFP est délithiée en procédant à une charge de la cellule électrochimique (demi-charge) pendant 6 heures à un régime de C/10 afin d'atteindre une tension de cellule de 3,3 V, correspondant à un plateau de potentiel à 3,4 V *vs* Li/Li⁺.

Après avoir atteint le plateau de potentiel, la cellule est maintenue en circuit ouvert pendant plusieurs heures afin de vérifier la stabilité du potentiel de l'électrode.

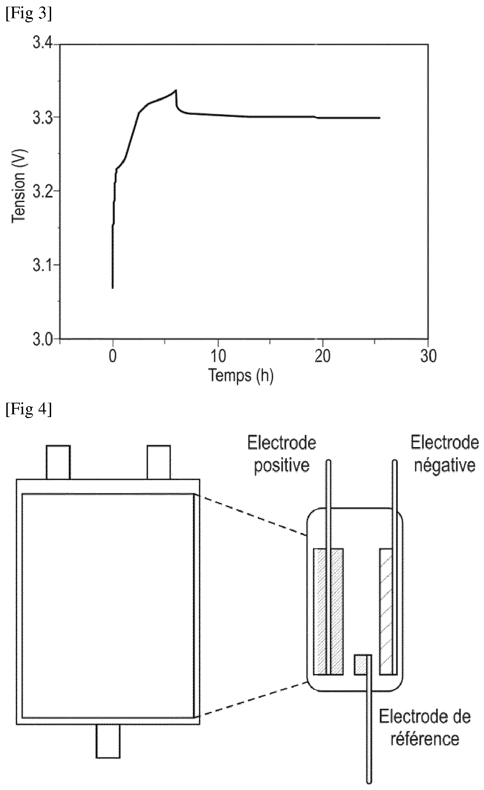

La figure 3 représente le profil de tension de la cellule graphite/LFP pendant et après une demi-charge à C/10.

Dans un second temps, la cellule est démontée en boite à gants pour récupérer l'électrode de référence à base de LFP partiellement délithiée. Celle-ci est rincée au carbonate de diméthyle (DMC) afin de nettoyer la porosité de l'électrode des sels présents.

Le grammage de l'électrode, correspondant à la masse de matériau actif Li₁₋ₓFePO₄ en grammes par unité de surface en cm², est de 24 mg/cm².

### 1.2. Mise en œuvre de l'électrode de LPF partiellement délithiée au niveau de la cellule d'un supercondensateur hybride au potassium

La réalisation du montage à trois électrodes est effectuée au format « pouch cell », à partir des électrodes suivantes :
- l'électrode de référence selon l'invention, préparée comme décrit au point 1.1. et découpée au format 5 mm × 10 mm.
- une électrode positive à base de carbone activé.

L'électrode positive est achetée chez Samwha Capacitor Group et utilisée telle que reçue. Il s'agit d'une électrode enduite sur un collecteur en aluminium non gravé de 20 µm, et dont la composition est la suivante : 91 % de carbone activé ; 3 % d'additif conducteur SuperC65 et 6 % de liant PVDF.
- une électrode négative à base de graphite

L'électrode négative est préparée par enduction, sur un collecteur en aluminium gravé de 30 µm d'épaisseur, d'une composition comprenant : 75,5 % de graphite de référence SMG-HE2 (obtenu auprès de Hitachi) 11,5 % de graphite de référence SFG6 (obtenu auprès de Timcal Co., Suisse) ; 10 % de noir de carbone de référence superC65 (obtenu auprès de Timcal Co., Suisse) ; 2 % d'un caoutchouc styrène-butadiène (obtenu auprès de BASF, 2427) ; 1 % de carboxyméthylcellulose (obtenu auprès de Ashland, 7HXF), les pourcentages étant des pourcentages massiques exprimés par rapport à la masse totale de l'électrode hormis le collecteur de courant.

Les électrodes positive et négative sont séchées à 55 °C puis découpées au format 35 mm × 35 mm.

L'assemblage de la cellule dans un emballage flexible en aluminium-plastique est réalisé en empilant les éléments dans l'ordre suivant :
1. l'électrode positive en carbone activé ;
2. un séparateur en polypropylène Celgard 2320 ;
3. l'électrode de référence ;
4. un séparateur en polypropylène ;
5. l'électrode négative en graphite.

Après un séchage à 55°C en étuve, l'activation de la cellule est réalisée en boite à gants en ajoutant 450 µL d'électrolyte à base d'acétonitrile et du sel KPF₆ (0,8 M).

Après l'ajout de l'électrolyte, l'emballage est scellé hermétiquement sous vide.

La figure 4 représente schématiquement la cellule au format pouch-cell du supercondensateur au potassium ainsi obtenue.

### EXEMPLE 2

### Utilisation de l'électrode de référence pour le suivi des potentiels des électrodes positive et négative lors de différentes étapes de formation d'un supercondensateur hybride au potassium

La mise en œuvre du montage à trois électrodes tel que décrit en exemple 1 permet de mesurer la tension de la cellule du supercondensateur hybride au potassium *via* un branchement entre les électrodes négative et positive; et de calculer les potentiels respectifs des électrodes positive et négative de la cellule du supercondensateur hybride au potassium *via* un branchement entre l'électrode de référence et l'électrode positive ou négative.

Par exemple, la figure 5 représente la tension de cellule et les potentiels des électrodes négative et positive pour la cellule de supercondensateur hybride au potassium préparée en exemple 1 :
- lors d'un cycle à 5C (figure 5 (a)),
- lors d'un cycle à C/2 (figure 5 (b)) et
- lors des différentes étapes de formation d'un supercondensateur hybride au potassium suivant le procédé décrit dans la demande déposée en France sous le numéro FR210957 : charge à C/2 jusqu'à 3,2 V, maintien pendant 24 heures à la tension de 3,2 V et décharge à C/2 jusqu'à 0,5 V (figure 5 (c)).

### EXEMPLE 3

### Mise en œuvre de l'électrode de référence au niveau d'une cellule d'un supercondensateur conventionnel au potassium

La réalisation du montage à trois électrodes est effectuée au format « pouch cell », à partir des électrodes suivantes :
- l'électrode de référence selon l'invention, préparée comme décrit au point 1.1. et découpée au format 5 mm × 10 mm.
- une électrode positive à base de carbone activé, telle que décrite en exemple 2 ;
- une électrode négative, identique à l'électrode positive, à base de carbone activé.

L'assemblage de la cellule dans un emballage flexible en aluminium-plastique est réalisé en empilant les éléments dans l'ordre suivant :
1. l'électrode positive en carbone activé ;
2. un séparateur en polypropylène ;
3. l'électrode de référence ;
4. un séparateur en polypropylène ;
5. l'électrode négative en carbone activé.

Après un séchage à 55°C en étuve, l'activation de la cellule est réalisée en boite à gants en ajoutant 450 µL d'électrolyte à base d'acétonitrile et du sel KPF₆.

Après l'ajout de l'électrolyte, l'emballage est scellé hermétiquement sous vide.

### EXEMPLE 4

### Utilisation de l'électrode de référence pour connaître les plages de potentiel de travail des électrodes d'un supercondensateur conventionnel au potassium

Les potentiels des électrodes sont suivis au cours du temps grâce à des cycles réalisés à un régime de C/2 entre les périodes de cyclage à un régime de 100C.

La figure 6 présente l'évolution de la capacité de la cellule du supercondensateur conventionnel préparée en exemple 3, au cours des cycles en alternant un cyclage à un régime C/2 et 100C.

La figure 7 représente l'évolution des potentiels des électrodes positive et négative lors des cycles à un régime de C/2 à différentes étapes du cyclage.

## Revendications

1. Utilisation, à titre d'électrode de référence dans une cellule d'un supercondensateur à électrolyte non-aqueux, d'une électrode à base de Li₁₋ₓFePO₄, avec 0,30 ≤ x ≤ 0,70, ledit supercondensateur étant un supercondensateur conventionnel au potassium ou hybride au potassium.

2. Utilisation selon la revendication précédente, dans laquelle ladite électrode de référence est à base de Li₁₋ₓFePO₄, dans laquelle x est compris entre 0,40 et 0,60, en particulier entre 0,50 et 0,60.

3. Utilisation selon la revendication 1 ou 2, ladite électrode présentant un potentiel électrochimique stable, en particulier de 3,4 V *vs* Li/Li⁺.

4. Utilisation selon l'une quelconque des revendications précédentes, dans laquelle ladite électrode de référence est préparée, préalablement à sa mise en œuvre dans ladite cellule, à partir d'une électrode à base de LiFePO₄, dite électrode LFP, par délithiation partielle permettant d'obtenir un potentiel électrochimique stable, en particulier stabilisé à une valeur de 3,4 V *vs* Li/Li⁺.

5. Utilisation selon la revendication précédente, dans laquelle ladite électrode de référence est obtenue *via* au moins les étapes suivantes :
(i) fourniture d'une cellule électrochimique, comprenant ladite électrode de LFP comme électrode positive, et une contre-électrode négative, en particulier à base de graphite, de lithium ou d'oxyde de silicum SiO_{y} où y est compris entre 1 et 2 ;
(ii) charge de ladite cellule dans des conditions adaptées pour atteindre un plateau de potentiel, en particulier à une valeur de 3,4 V *vs* Li/Li⁺,
ladite charge étant de préférence réalisée à un régime allant de C/2 à C/100, en particulier de C/10, pendant une durée comprise entre 1 et 50 heures, en particulier entre 5 et 7 heures.

6. Utilisation selon l'une quelconque des revendications précédentes, dans laquelle le matériau Li₁₋ₓFePO₄ représente de 60 à 97 % massique, en particulier de 70 à 96 % massique, par rapport à la masse totale de l'électrode, exclusion faite de la masse du collecteur de courant de l'électrode.

7. Utilisation selon l'une quelconque des revendications précédentes, dans laquelle ladite électrode de référence comprend, outre ledit matériau Li₁₋ₓFePO₄, un ou plusieurs liants, en particulier choisis parmi des liants polymériques, et éventuellement un ou plusieurs additifs conducteurs électroniques, notamment choisis parmi des fibres de carbone, du noir de carbone, des nanotubes de carbone et leurs mélanges.

8. Utilisation selon l'une quelconque des revendications précédentes, dans laquelle ladite électrode de référence présente un grammage, défini comme la masse de matériau Li₁₋ₓFePO₄ en grammes par unité de surface en cm², compris entre 2 mg/cm² et 30 mg/cm², en particulier entre 5 mg/cm² et 25 mg/cm².

9. Utilisation selon l'une quelconque des revendications précédentes, dans au moins l'une des cellules d'un supercondensateur conventionnel au potassium, ladite cellule comportant des électrodes positive et négative à base de carbone activé.

10. Utilisation selon l'une quelconque des revendications 1 à 8, dans au moins l'une des cellules d'un supercondensateur hybride au potassium, ladite cellule comportant une électrode positive à base de carbone activé, une électrode négative à base d'un matériau carboné d'intercalation d'au moins du potassium et plus particulièrement à base de graphite.

11. Utilisation selon l'une quelconque des revendications précédentes, dans laquelle l'électrolyte de ladite cellule comprend au moins un sel de potassium, de préférence choisi parmi du perchlorate de potassium (KClO₄), fluoroborate de potassium (KBF₄), hexafluorophosphate de potassium (KPF₆), et les mélanges de ceux-ci, notamment du KPF₆, dans un ou plusieurs solvants organiques, le ou lesdits solvants organiques étant en particulier choisis parmi les solvants carbonates, les solvants éthers linéaires, les solvants nitriles, les solvants lactones, les solvants amides et les mélanges de ceux-ci, de préférence les solvants nitriles, tel que l'acétonitrile.

12. Utilisation selon l'une quelconque des revendications précédentes, ladite cellule étant dans un format prismatique, en particulier sous la forme d'une cellule type sachet souple, dite « pouch cell ».

13. Utilisation selon l'une quelconque des revendications précédentes, pour connaître les potentiels d'au moins l'une des électrodes positive et négative, de préférence de chacune des électrodes positive et négative de ladite cellule de supercondensateur, en particulier pour suivre l'évolution des potentiels d'au moins l'une des électrodes positive et négative, au cours du fonctionnement dudit supercondensateur.

14. Cellule pour un supercondensateur, conventionnel ou hybride, comportant un électrolyte non-aqueux comprenant au moins un sel de potassium, ladite cellule comportant au moins :
- une électrode positive (22), en particulier à base de carbone activé ;
- une électrode négative (23), en particulier à base de carbone activé dans le cas d'un supercondensateur conventionnel, ou à base d'un matériau carboné d'intercalation du potassium, en particulier à base de graphite, dans le cas d'un supercondensateur hybride ;
- une électrode de référence (21) à base de Li₁₋ₓFePO₄ avec 0,30 ≤ x ≤ 0,70, en particulier 0,50 ≤ x ≤ 0,60.

15. Cellule selon la revendication 14, dans laquelle ladite électrode de référence est telle que définie dans l'une quelconque des revendications 2 à 8 et/ou l'électrolyte non-aqueux est tel que défini en revendication 11.

16. Cellule selon la revendication 14 ou 15, ladite cellule comportant l'assemblage (100) dans cet ordre d'empilement, des éléments suivants :
- ladite électrode positive (22), en particulier à base de carbone activé ; en particulier formée d'une double couche (220) à base de carbone activé sur un collecteur de courant (221), par exemple en aluminium ;
- un séparateur poreux (24), par exemple en polypropylène, destiné à être imprégné par l'électrolyte ;
- ladite électrode de référence (21), en particulier telle que définie dans l'une quelconque des revendications 2 à 8, formée d'une couche (211) du matériau d'électrode à base de Li₁₋ₓFePO₄ au niveau d'un collecteur de courant (212), par exemple en aluminium revêtue de carbone ;
- un séparateur poreux (24), par exemple en polypropylène, destiné à être imprégné par l'électrolyte ; et
- ladite électrode négative (23), en particulier formée d'une couche (231) à base de carbone activé dans le cas d'un supercondensateur conventionnel, ou à base d'un matériau carboné d'intercalation d'au moins du potassium, par exemple à base de graphite, dans le cas d'un supercondensateur hybride, sur un collecteur de courant (232), par exemple en aluminium.

17. Supercondensateur, conventionnel ou hybride, comprenant au moins une cellule telle que définie selon l'une quelconque des revendications 14 à 16.

## Patentansprüche

1. Verwendung einer Elektrode auf Basis von Li₁₋ₓFePO₄ mit 0,30 ≤ x ≤ 0,70 als Referenzelektrode in einer Zelle eines Superkondensators mit nicht-wässrigem Elektrolyten, wobei der Superkondensator ein konventioneller Kalium- oder Hybrid-Kalium-Superkondensator ist.

2. Verwendung nach dem vorhergehenden Anspruch, wobei die Referenzelektrode auf Basis von Li₁₋ₓFePO₄ ist, wobei x zwischen 0,40 und 0,60 liegt, insbesondere zwischen 0,50 und 0,60.

3. Verwendung nach Anspruch 1 oder 2, wobei die Elektrode ein stabiles elektrochemisches Potential aufweist, insbesondere von 3,4 V vs. Li/Li⁺.

4. Verwendung nach einem der vorhergehenden Ansprüche, wobei die Referenzelektrode vor ihrem Einsatz in der Zelle aus einer Elektrode auf Basis von LiFePO₄, LFP-Elektrode genannt, durch partielle Delithiierung vorbereitet wird, was es ermöglicht, ein stabiles elektrochemisches Potential zu erhalten, das insbesondere auf einen Wert von 3,4 V vs. Li/Li⁺ stabilisiert ist.

5. Verwendung nach dem vorhergehenden Anspruch, wobei die Referenzelektrode über mindestens die folgenden Schritte erhalten wird:
(i) Bereitstellen einer elektrochemischen Zelle, umfassend die LFP-Elektrode als positive Elektrode und eine negative Gegenelektrode, insbesondere auf Basis von Graphit, Lithium oder Siliciumoxid SiO_{y}, wobei y zwischen 1 und 2 liegt;
(ii) Laden der Zelle unter Bedingungen, die geeignet sind, ein Potentialplateau zu erreichen, insbesondere bei einem Wert von 3,4 V vs. Li/Li⁺,
wobei das Laden vorzugsweise mit einer Rate von C/2 bis C/100, insbesondere von C/10, während einer Dauer zwischen 1 und 50 Stunden, insbesondere zwischen 5 und 7 Stunden, durchgeführt wird.

6. Verwendung nach einem der vorhergehenden Ansprüche, wobei das Material Li₁₋ₓFePO₄ 60 bis 97 Massen-%, insbesondere 70 bis 96 Massen-%, bezogen auf die Gesamtmasse der Elektrode, unter Ausschluss aus der Masse des Stromkollektors der Elektrode, ausmacht.

7. Verwendung nach einem der vorhergehenden Ansprüche, wobei die Referenzelektrode neben dem Material Li₁₋ₓFePO₄ ein oder mehrere Bindemittel, die insbesondere aus polymerischen Bindemitteln gewählt sind, und gegebenenfalls ein oder mehrere elektronisch leitfähige Additive, die insbesondere aus Kohlenstofffasern, Ruß, Kohlenstoffnanoröhren und deren Mischungen gewählt sind, umfasst.

8. Verwendung nach einem der vorhergehenden Ansprüche, wobei die Referenzelektrode eine Grammatur, definiert als die Masse des Materials Li₁₋ₓFePO₄ in Gramm je Flächeneinheit in cm², zwischen 2 mg/cm² und 30 mg/cm², insbesondere zwischen 5 mg/cm² und 25 mg/cm², aufweist.

9. Verwendung gemäß einem der vorhergehenden Ansprüche in mindestens einer der Zellen eines konventionellen Kalium-Superkondensators, wobei die Zelle positive und negative Elektroden auf Basis von aktiviertem Kohlenstoff beinhaltet.

10. Verwendung nach einem der Ansprüche 1 bis 8 in mindestens einer der Zellen eines Hybrid-Kalium-Superkondensators, wobei die Zelle eine positive Elektrode auf Basis von aktiviertem Kohlenstoff, eine negative Elektrode auf Basis eines kohlenstoffhaltigen Materials zur Interkalation von mindestens Kalium und insbesondere auf Basis von Graphit beinhaltet.

11. Verwendung nach einem der vorhergehenden Ansprüche, wobei der Elektrolyt der Zelle mindestens ein Kaliumsalz, das vorzugsweise aus Kaliumperchlorat (KClO₄), Kaliumfluoroborat (KBF₄), Kaliumhexafluorophosphat (KPF₆) und Mischungen davon, insbesondere KPF₆, ausgewählt ist, in einem oder mehreren organischen Lösemitteln umfasst, wobei das oder die organischen Lösemittel insbesondere aus den Karbonat-Lösemitteln, den linearen Ether-Lösungsmitteln, den Nitril-Lösemitteln, den Lacton-Lösemitteln, den Amid-Lösemitteln und Mischungen davon, vorzugsweise den Nitril-Lösemitteln wie Acetonitril, gewählt sind.

12. Verwendung nach einem der vorhergehenden Ansprüche, wobei die Zelle in einem prismatischen Format vorliegt, insbesondere in Form einer Zelle vom Typ eines flexiblen Beutels, "pouch cell" genannt.

13. Verwendung nach einem der vorhergehenden Ansprüche, um die Potentiale von mindestens einer der positiven und negativen Elektroden, vorzugsweise von jeder der positiven und negativen Elektroden der Superkondensatorzelle, zu ermitteln, insbesondere, um den Verlauf der Potentiale von mindestens einer der positiven und negativen Elektroden während des Betriebs des Superkondensators zu verfolgen.

14. Zelle für einen konventionellen oder Hybrid-Superkondensator, die einen nicht-wässrigen Elektrolyten beinhaltet, der mindestens ein Kaliumsalz umfasst, wobei die Zelle mindestens beinhaltet:
- eine positive Elektrode (22), insbesondere auf Basis von aktiviertem Kohlenstoff;
- eine negative Elektrode (23), insbesondere auf Basis von aktiviertem Kohlenstoff im Fall eines konventionellen Superkondensators oder auf Basis eines kohlenstoffhaltigen Materials zur Interkalation von Kalium, insbesondere auf Basis von Graphit, im Fall eines Hybrid-Superkondensators;
- eine Referenzelektrode (21) auf Basis von Li₁₋ₓFePO₄ mit 0,30 ≤ x≤ 0,70, insbesondere 0,50 ≤ x ≤ 0,60.

15. Zelle nach Anspruch 14, wobei die Referenzelektrode wie in einem der Ansprüche 2 bis 8 definiert ist und/oder der nicht-wässrige Elektrolyt wie in Anspruch 11 definiert ist.

16. Zelle nach Anspruch 14 oder 15, wobei die Zelle die Anordnung (100), in dieser Stapelreihenfolge, der folgenden Elementen beinhaltet:
- die positive Elektrode (22), insbesondere auf Basis von aktiviertem Kohlenstoff; insbesondere gebildet aus einer doppelten Schicht (220) auf Basis von aktiviertem Kohlenstoff auf einem Stromkollektor (221), zum Beispiel aus Aluminium;
- ein poröser Separator (24), zum Beispiel aus Polypropylen, der dazu bestimmt ist, durch den Elektrolyten imprägniert zu werden;
- die Referenzelektrode (21), insbesondere wie in einem der Ansprüche 2 bis 8 definiert, die aus einer Schicht (211) des Elektrodenmaterials auf Basis von Li₁₋ₓFePO₄ an einem Stromkollektor (212) gebildet ist, zum Beispiel aus kohlenstoffbeschichtetem Aluminium;
- ein poröser Separator (24), zum Beispiel aus Polypropylen, der dazu bestimmt ist, durch den Elektrolyten imprägniert zu werden; und
- die negative Elektrode (23), insbesondere gebildet aus einer Schicht (231) auf Basis von aktiviertem Kohlenstoff im Fall eines konventionellen Superkondensators oder auf Basis eines kohlenstoffhaltigen Materials zur Interkalation von mindestens Kalium, zum Beispiel auf Basis von Graphit, im Fall eines Hybrid-Superkondensators, auf einem Stromkollektor (232), zum Beispiel aus Aluminium.

17. Konventioneller oder Hybrid-Superkondensator, der mindestens eine Zelle wie in einem der Ansprüche 14 bis 16 definiert umfasst.

## Claims

1. Use of an electrode based on Li₁₋ₓFePO₄, with 0.30 ≤ x ≤ 0.70, as a reference electrode in a cell of a nonaqueous electrolytic supercapacitor, said supercapacitor being a conventional potassium-ion supercapacitor or a potassium-ion hybrid supercapacitor.

2. Use according to the preceding claim, wherein said reference electrode is based on Li₁₋ₓFePO₄, in which x is between 0.40 and 0.60, in particular between 0.50 and 0.60.

3. Use according to Claim 1 or 2, said electrode having a stable electrochemical potential, in particular of 3.4 V vs Li/Li⁺.

4. Use according to any one of the preceding claims, wherein said reference electrode is prepared, prior to being used in said cell, from an electrode based on LiFePO₄, known as LFP electrode, by partial delithiation making it possible to obtain a stable electrochemical potential, in particular stabilized at a value of 3.4 V vs Li/Li⁺.

5. Use according to the preceding claim, wherein said reference electrode is obtained via at least the following steps:
(i) providing an electrochemical cell, comprising said LFP electrode as a positive electrode, and a negative counter electrode, in particular based on graphite, lithium or silicon oxide SiO_{y} where y is between 1 and 2;
(ii) charging said cell under conditions suitable for reaching a potential plateau, in particular at a value of 3.4 V vs Li/Li⁺,
said charging preferably being carried out at a regime ranging from C/2 to C/100, in particular C/10, for a duration of between 1 and 50 hours, in particular between 5 and 7 hours.

6. Use according to any one of the preceding claims, wherein the Li₁₋ₓFePO₄ material represents from 60% to 97% by mass, in particular from 70% to 96% by mass, relative to the total mass of the electrode, excluding the mass of the current collector of the electrode.

7. Use according to any one of the preceding claims, wherein said reference electrode comprises, in addition to said Li₁₋ₓFePO₄ material, one or more binders, in particular selected from polymeric binders, and optionally one or more electronically conductive additives, in particular selected from carbon fibres, carbon black, carbon nanotubes and mixtures thereof.

8. Use according to any one of the preceding claims, wherein said reference electrode exhibits a grammage, defined as the mass of Li₁₋ₓFePO₄ material in grams per unit of surface area in cm², of between 2 mg/cm² and 30 mg/cm², in particular between 5 mg/cm² and 25 mg/cm².

9. Use according to any one of the preceding claims, in at least one of the cells of a conventional potassium-ion supercapacitor, said cell comprising positive and negative electrodes based on activated carbon.

10. Use according to any one of Claims 1 to 8, in at least one of the cells of a potassium-ion hybrid supercapacitor, said cell comprising a positive electrode based on activated carbon, a negative electrode based on a carbon-based material for intercalating at least potassium and more particularly based on graphite.

11. Use according to any one of the preceding claims, wherein the electrolyte of said cell comprises at least one potassium salt, preferably selected from potassium perchlorate (KClO₄), potassium fluoroborate (KBF₄), potassium hexafluorophosphate (KPF₆), and mixtures thereof, in particular KPF₆, in one or more organic solvents, said organic solvent (s) being in particular selected from carbonate solvents, linear ether solvents, nitrile solvents, lactone solvents, amide solvents and mixtures thereof, preferably nitrile solvents, such as acetonitrile.

12. Use according to any one of the preceding claims, said cell being in a prismatic format, in particular in the form of a pouch cell.

13. Use according to any one of the preceding claims, for determining the potentials of at least one of the positive and negative electrodes, preferably of each of the positive and negative electrodes of said supercapacitor cell, in particular for monitoring the evolution of the potentials of at least one of the positive and negative electrodes, during the operation of said supercapacitor.

14. Cell for a conventional or hybrid supercapacitor, comprising a non-aqueous electrolyte comprising at least one potassium salt, said cell comprising at least:
- a positive electrode (22), in particular based on activated carbon;
- a negative electrode (23), in particular based on activated carbon in the case of a conventional supercapacitor, or based on a carbon-based potassium intercalation material, in particular based on graphite, in the case of a hybrid supercapacitor;
- a reference electrode (21) based on Li₁₋ₓFePO₄ with 0.30 ≤ x ≤ 0.70, in particular 0.50 ≤ x ≤ 0.60.

15. Cell according to Claim 14, wherein said reference electrode is as defined in any one of Claims 2 to 8 and/or the nonaqueous electrolyte is as defined in Claim 11.

16. Cell according to Claim 14 or 15, said cell comprising the assembly (100), in this stacking order, of the following elements:
- said positive electrode (22), in particular based on activated carbon; in particular formed of a double layer (220) based on activated carbon on a current collector (221), for example made of aluminium;
- a porous separator (24), for example made of polypropylene, intended to be impregnated with the electrolyte;
- said reference electrode (21), in particular as defined in any one of Claims 2 to 8, formed of a layer (211) of the electrode material based on Li₁₋ₓFePO₄ at a current collector (212), for example made of carbon-coated aluminium;
- a porous separator (24), for example made of polypropylene, intended to be impregnated with the electrolyte; and
- said negative electrode (23), in particular formed of a layer (231) based on activated carbon in the case of a conventional supercapacitor, or based on a carbon-based material for intercalating at least potassium, for example based on graphite, in the case of a hybrid supercapacitor, on a current collector (232), for example made of aluminium.

17. Conventional or hybrid supercapacitor, comprising at least one cell as defined in any one of Claims 14 to 16.
